# EUROPÄISCHE PATENTSCHRIFT

(11) **EP 2 383 092 B1**
(45) Veröffentlichungstag und Bekanntmachung des Hinweises auf die Patenterteilung: **06.07.2016**
(21) Anmeldenummer: 11156523.0
(22) Anmeldetag: 02.03.2011
(51) Int. Cl.: B29C 33/42, B29C 37/00, B29C 37/02, B29C 70/54, F03D 1/06, B29D 99/00

(54) **Vorrichtung und Teilform für die Herstellung von Rotorblättern für Windenergieanlagen und Herstellungsverfahren**
Device and unit mould for the production of rotor blades for wind energy facilities and method for producing same
Dispositif et partie de moule pour la fabrication de lames de rotor pour éoliennes et procédé de fabrication

(30) Priorität: 25.03.2010 DE 102010003296
(43) Veröffentlichungstag der Anmeldung: 02.11.2011
(73) Patentinhaber: Senvion GmbH, 22297 Hamburg (DE)
(72) Erfinder: Kulenkampff, Jens, 24103 Kiel (DE)
(74) Vertreter: Volmer, Jochen

(56) Entgegenhaltungen:
- EP-A1- 1 310 351
- EP-A2- 0 465 754
- WO-A1-2009/139619
- US-A- 5 669 131
- US-A1- 2004 099 109

## Beschreibung

Die Erfindung betrifft eine Vorrichtung für die Herstellung von Rotorblättern für Windenergieanlagen, mit einer mehrteiligen Herstellungsform für ein Rotorblatt, das entlang einer Längserstreckung, die sich von einer Rotorblattwurzel im Wesentlichen zu einer Rotorblattspitze erstreckt, wenigstens einen Bereich aufweist, in der das Rotorblatt ein aerodynamisches Querschnittsprofil aufweist, das eine Profilvorderkante und eine Profilhinterkante aufweist, die über eine Saugseite und eine Druckseite des Querschnittsprofils verbunden sind, wobei wenigstens zwei Teilformen für wenigstens zwei Schalenteile eines Rotorblatts vorgesehen sind, von denen ein erstes Schalenteil und ein zweites Schalenteil im Bereich der Profilhinterkante im Wesentlichen flächig aufeinander liegend miteinander zu verbinden sind. Die Erfindung betrifft weiter eine entsprechende Teilform, sowie Verfahren zum Herstellen von Herstellungsformen für Rotorblätter für Windenergieanlagen sowie zum Herstellen eines Rotorblatts.

Rotorblätter für Windenergieanlagen werden üblicherweise in einer Schalenbauweise gefertigt, wobei in verschiedenen Formen bzw. Teilformen Schalenteile hergestellt werden, die nach dem Aushärten in ihren Teilformen zusammengesetzt und miteinander verbunden werden. Schalen von Rotorblättern werden üblicherweise aus faserverstärkten Kunststoffen, beispielsweise glasfaserverstärkten Polyesterharzen oder Epoxidharzen, hergestellt, die in die entsprechenden Teilformen eingelegt und anschließend ausgehärtet werden.

Im häufig angewendeten Fall, dass Halbschalen für eine Druckseite und für eine Saugseite eines Rotorblatts hergestellt und miteinander verbunden werden, stoßen die Schalenteile bzw. Halbschalen an der Vorderkante des Rotorblatts mit ihren Rändern aufeinander. An der Hinterkante des Rotorblatts verlaufen die Schalenteile im Wesentlichen parallel und werden aufeinander gelegt. Der Zwischenraum zwischen den Schalenteilen an der Hinterkante wird mit einem Klebstoff, beispielsweise einem Harz, ausgefüllt, mit dem eine feste Verbindung der Schalenteile an der Hinterkante des Rotorblatts hergestellt wird.

Dies ist beispielsweise in WO 2009/139619 A1 der Fall. Hierin werden die Faserverbund-Schalenteile in Teilformen einer mehrteiligen Form hergestellt, die an der jeweiligen Profilvorder- bzw. -hinter-kante abknicken. Die Fasermatten werden über die Kanten hinaus verlegt und knicken dabei selbst ab. Die Knicke in den Fasermatten, die von den Kanten der Teilformen stammen, definieren jeweils die Profilvorder- bzw. -hinterkante, die somit direkt abgeformt werden. Die Teilformen werden zum Verbinden der Schalenteile miteinander mit den Knicken exakt aufeinander gelegt.

In EP 1 310 351 A1 ist eine alternative mehrteilige Form zur Herstellung eines Rotorblattes gezeigt, in der die Hinterkante direkt abgeformt ist. Die Belegung der Fasermatten in den Teilformen endet an der Hinterkante der Form. An der hinteren Stoßkante zwischen der oberen und der unteren Teilform ist ein schmaler Durchgang zu einem hinter der Profilhinterkante angeordneten Überlaufcontainer vorhanden, der sich bei der Harzinfusion mit Harz füllt.

Zum Positionieren der Halbschalen relativ zueinander in ihren Teilformen ist wenigstens eine Teilform gegenüber der anderen verschiebbar ausgebildet. Beim Zusammenfügen der Schalenteile wird darauf geachtet, dass die Positionierung der Formen und der Schalenteile an der Vorderkante des Rotorblatts zu einem exakten Anschluss führt. Um Ungenauigkeiten in der Schalenform und Schalendicke auszugleichen, muss an der Hinterkante ein gewisses Spiel vorhanden sein. Hierzu werden die Schalenteile an der Hinterkante zunächst nicht direkt abgeformt, sondern über die eigentliche Endkante bzw. Hinterkante verlängert hergestellt, um Spielraum für die exakte Positionierung der Vorderkante zu gewinnen.

Um nach der Herstellung des Rotorblatts die Endkante bzw. Hinterkante herzustellen, wird das Rotorblatt an der Hinterkante besäumt, d.h. der Teil des Rotorblatts und der Schalenteile, die die Hinterkante bilden, werden entlang einer Besäumungslinie abgetrennt, die mit der Hinterkante übereinstimmt. Die Bestimmung der exakten Besäumungslinie stellt allerdings eine technische Herausforderung dar, da es bei für Rotorblätter typischen sphärisch gekrümmten Oberflächen schwierig ist, die Position der Endkante genau zu messen. Entsprechende Vorrichtungen sind aufwändig, groß und kostenintensiv.

Ausgehend von diesem Stand der Technik liegt der vorliegenden Erfindung die Aufgabe zugrunde, eine Möglichkeit zur kostengünstigen, genauen und reproduzierbaren Besäumung bei einer Vielzahl von Rotorblättern zu schaffen.

Die der Erfindung zugrunde liegende Aufgabe wird durch eine Vorrichtung für die Herstellung von Rotorblättern für Windenergieanlagen mit einer mehrteiligen Herstellungsform für ein Rotorblatt gelöst, das entlang einer Längserstreckung, die sich von einer Rotorblattwurzel im Wesentlichen zu einer Rotorblattspitze erstreckt, wenigstens einen Bereich aufweist, in der das Rotorblatt ein aerodynamisches Querschnittsprofil aufweist, das eine Profilvorderkante und eine Profilhinterkante aufweist, die über eine Saugseite und eine Druckseite des Querschnittsprofils verbunden sind, wobei wenigstens zwei Teilformen für wenigstens zwei Schalenteile eines Rotorblatts vorgesehen sind, von denen ein erstes Schalenteil und ein zweites Schalenteil im Bereich der Profilhinterkante im Wesentlichen flächig aufeinander liegend miteinander zu verbinden sind, die dadurch weitergebildet ist, dass die Teilformen zur Herstellung von über die eigentliche Profilhinterkante verlängerten Schalenteilen ausgebildet sind und eine Teilform im Bereich der Hinterkante eine sich in einer Längsrichtung der Teilform erstreckende Markierungsform zur Erzeugung einer Besäumungsmarkierung an einem Schalenteil im Bereich der Hinterkante des Rotorblatts aufweist.

Die Erfindung beruht auf der Grundidee, dass eine Markierungsform, die den Verlauf der Besäumungskante bzw. der Endkante des Rotorblatts andeutet, in die entsprechende Teilform eingearbeitet ist oder eingearbeitet wird. Beim Herstellen des entsprechenden Schalenteils durch Einlegen des noch nicht ausgehärteten Schalenmaterials, beispielsweise eines glasfaserverstärkten Kunststoffes, nimmt das Schalenmaterial an der entsprechenden Stelle ein Negativ der Markierungsform an. Nach dem Herauslösen des Schalenmaterials bzw. der Schale aus der Teilform weist das entsprechende Schalenteil bzw. das Rotorblatt an seiner Außenseite ein Negativ der Markierungsform auf, die dem Verlauf der zu besäumenden Hinterkante bzw. Endkante entspricht.

Da die Markierungsform in der vielfach wiederverwendeten Teilform angeordnet ist, ist der Verlauf der Hinterkante bei einer Vielzahl von Rotorblättern reproduzierbar, die mit der entsprechenden Teilform hergestellt worden ist. Die Erzeugung einer entsprechenden Markierungsform in einer Teilform muss nur einmal vorgenommen werden, ist wenig kostenintensiv und sehr genau möglich. Ein weiterer Vorteil besteht darin, dass das Material der Form bzw. Teilform wesentlich steifer ist als das Material der Rotorblattschale, so dass auch die Messung, die zur Anbringung der Markierungsform in der Teilform nötig ist, genauere und reproduzierbare Ergebnisse bringt, als dies bei einer Messung am Rotorblatt selber möglich ist.

Die Schalenteile und die entsprechenden Teilformen können Halbschalen sein, wobei eine Schale für die Saugseite und eine Schale für die Druckseite des Rotorblatts vorgesehen ist. Eine der beiden Seiten oder beide Seiten können jedoch auch mittels mehrerer Schalenteile und entsprechender Teilformen hergestellt sein.

Das Merkmal des flächigen Aufeinanderliegens der Schalenteile im Bereich der Hinterkante bedeutet im Rahmen der Erfindung, dass sich die Schalenteile der Saugseite und der Druckseite an der Hinterkante im Profil in Richtung einem aerodynamischen Querschnittsprofil folgend auf die Hinterkante zu erstrecken. Dabei nähern sie sich auf die Hinterkante zu gegebenenfalls weiter aneinander an. Der Zwischenraum zwischen den Schalenteilen an der Hinterkante wird mit einer Klebmasse, beispielsweise einem Harz, gefüllt, der eine stoffschlüssige flächenhafte Verbindung zwischen den einander gegenüber liegenden Schalenteilen an der Hinterkante erzeugt. Die Besäumung erfolgt nach der Verbindung bzw. Verklebung der Schalenteile.

Vorzugsweise ist die Markierungsform in der Teilform als längserstreckte vertiefte Rinne, als längserstreckter erhabener Wulst oder als längserstreckte Kante ausgebildet. Eine längserstreckte vertiefte Rinne erzeugt in dem entsprechenden Schalenteil einen längserstreckten erhabenen Wulst. Ein längserstreckter erhabener Wulst in der Teilform erzeugt in dem entsprechenden Schalenteil eine längserstreckte vertiefte Rinne. Der Wulst ist das Negativ einer Rinne. Im Querschnitt ist die Rinne bzw. der Wulst beispielsweise rechteckig, abgerundet, oder polygonal ausgebildet. Die Negative der Markierungsform in dem Material der Schale sind formkomplementär zu den entsprechenden Markierungsformen.

Alternativ hierzu ist die Markierungsform ebenfalls, vorteilhafterweise unterbrochen oder abschnittsweise vorhanden. Es handelt sich in diesem Fall erfindungsgemäß um eine Abfolge von Vertiefungen oder Erhöhungen mit quadratischem, rundem oder länglichem Umriss.

Vorteilhafterweise ist die Markierungsform in einer Teilform angeordnet, die für ein Schalenteil vorgesehen ist, das während der Herstellung des Rotorblatts und/oder während einer Besäumung der Hinterkante des Rotorblatts bezüglich der Hinterkante oben liegt. Diese Anordnung vereinfacht den Vorgang der Besäumung, da die Besäumungsmarkierung einfach sichtbar obenauf liegt. Hierzu kann die Markierungsform in einer Teilform angeordnet sein, die für ein Schalenteil vorgesehen ist, das während der Herstellung des Rotorblatts fest oder fixiert ist, oder alternativ hierzu in einer Teilform, die für ein Schalenteil vorgesehen ist, das während der Herstellung des Rotorblatts verschiebbar ist. Beide Alternativen liefern eine saubere Besäumung.

Die der Erfindung zugrunde liegende Aufgabe wird ebenfalls gelöst durch eine Teilform einer Herstellungsform für ein Rotorblatt für eine Windenergieanlage, das entlang einer Längserstreckung, die sich von einer Rotorblattwurzel im Wesentlichen zu einer Rotorblattspitze erstreckt, wenigstens einen Bereich aufweist, in der das Rotorblatt ein aerodynamisches Querschnittsprofil aufweist, das eine Profilvorderkante und eine Profilhinterkante aufweist, die über eine Saugseite und eine Druckseite des Querschnittsprofils verbunden sind, wobei die Teilform für ein Schalenteil des Rotorblatts vorgesehen ist, das eine Hinterkante des Rotorblatts umfasst, die dadurch weitergebildet ist, dass die Teilform im Bereich der Hinterkante zur Herstellung eines über die eigentliche Profilhinterkante verlängerten Schalenteils ausgebildet ist und eine sich in einer Längsrichtung der Teilform erstreckende Markierungsform zur Erzeugung einer Besäumungsmarkierung an dem Schalenteil im Bereich der Hinterkante des Rotorblatts aufweist.

Diese erfindungsgemäße Teilform entspricht der Teilform mit der Markierungsform aus der erfindungsgemäßen Vorrichtung, die zuvor bereits beschrieben worden ist.

Dabei ist vorzugsweise vorgesehen, dass die Markierungsform als längserstreckte vertiefte Rinne oder als längserstreckter erhabener Wulst ausgebildet ist.

Die der Erfindung zugrunde liegende Aufgabe wird auch gelöst durch ein Verfahren zum Herstellen von Herstellungsformen für Rotorblätter für Windenergieanlagen, wobei ein Rotorblatt entlang einer Längserstreckung, die sich von einer Rotorblattwurzel im Wesentlichen zu einer Rotorblattspitze erstreckt, wenigstens einen Bereich aufweist, in der das Rotorblatt ein aerodynamisches Querschnittsprofil aufweist, das eine Profilvorderkante und eine Profilhinterkante aufweist, die über eine Saugseite und eine Druckseite des Querschnittsprofils verbunden sind, das dadurch weitergebildet ist, dass in einer Teilform für ein Schalenteil des Rotorblatts, das die Hinterkante des Rotorblatts umfasst und über die eigentliche Profilhinterkante verlängert hergestellt wird, im Bereich der Hinterkante eine sich in Längsrichtung der Teilform erstreckende Markierungsform zur Erzeugung einer Besäumungsmarkierung an dem Schalenteil im Bereich der Hinterkante des Rotorblatts angebracht wird.

Das erfindungsgemäße Verfahren hat als Resultat somit eine Vorrichtung bzw. eine Teilform, die erfindungsgemäß eine Markierungsform zur Erzeugung einer Besäumungsmarkierung im Bereich der Hinterkante des Rotorblatts aufweist.

Die der Erfindung zugrunde liegende Aufgabe wird ferner gelöst durch ein Verfahren zum Herstellen eines Rotorblatts für eine Windenergieanlage, das entlang einer Längserstreckung, die sich von einer Rotorblattwurzel im Wesentlichen zu einer Rotorblattspitze erstreckt, wenigstens einen Bereich aufweist, in der das Rotorblatt ein aerodynamisches Querschnittsprofil aufweist, das eine Profilvorderkante und eine Profilhinterkante aufweist, die über eine Saugseite und eine Druckseite des Querschnittsprofils verbunden sind, wobei Schalenteile des Rotorblatts in einer mehrere Teilformen umfassenden Vorrichtung, insbesondere wie vorstehend beschrieben, hergestellt werden, das dadurch weitergebildet ist, dass mittels einer Teilform mit einer sich in Längsrichtung der Teilform erstreckenden Markierungsform an einem Schalenteil, das eine Hinterkante des Rotorblatts umfasst und über die eigentliche Profilhinterkante verlängert hergestellt wird, im Bereich der Hinterkante eine Besäumungsmarkierung an dem Schalenteil erzeugt wird und nach dem Zusammensetzen der Schalenteile zum Rotorblatt die Hinterkante des Rotorblatts entlang der Besäumungsmarkierung besäumt wird. Das erfindungsgemäß hergestellte Rotorblatt weist somit eine Besäumungsmarkierung im Bereich der Hinterkante auf, die reproduzierbar und kostengünstig hergestellt ist und zur Besäumung der Hinterkante des Rotorblatts dient.

Das erfindungsgemäße Verfahren wird vorzugsweise dadurch weitergebildet, dass die Besäumungsmarkierung beim Besäumen der Hinterkante des Rotorblatts bei einem abgeschnittenen Besäumungsrand verbleibt. Die Besäumung erfolgt nach dem Entformen des Rotorblatts und nachdem die Hinterkantenteile der Schaltenteile miteinander verklebt worden sind, so dass eine Hinterkante des Rotorblatts gebildet worden ist. Die Besäumungsmarkierung ist mit dem Besäumungsrand bzw. Saum abgeschnitten worden und somit nicht Teil des aerodynamischen Profils des Rotorblatts.

Die zu den einzelnen Gegenständen der Erfindung, d.h. der Vorrichtung, der Teilform, dem Verfahren zum Herstellen von Herstellungsformen und dem Verfahren zum Herstellen eines Rotorblatts genannten Merkmale, technischen Wirkungen und Vorteile gelten in gleicher Weise auch für die jeweils anderen Erfindungsgegenstände.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Draufsicht auf ein Rotorblatt,
- Fig. 2: eine schematische Schnittdarstellung durch ein Rotorblatt gemäß Fig. 1,
- Fig. 3: eine schematische Schnittdarstellung durch eine erfindungsgemäße Vorrichtung,
- Fig. 4: eine schematische Schnittdarstellung im Detail eines Rotorblatts mit einer erfindungsgemäßen Besäumungsmarkierung,
- Fig. 5: eine schematische Schnittdarstellung im Detail einer erfindungsgemäßen Teilform und
- Fig. 6: eine schematische Schnittdarstellung im Detail einer weiteren erfindungsgemäßen Teilform.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

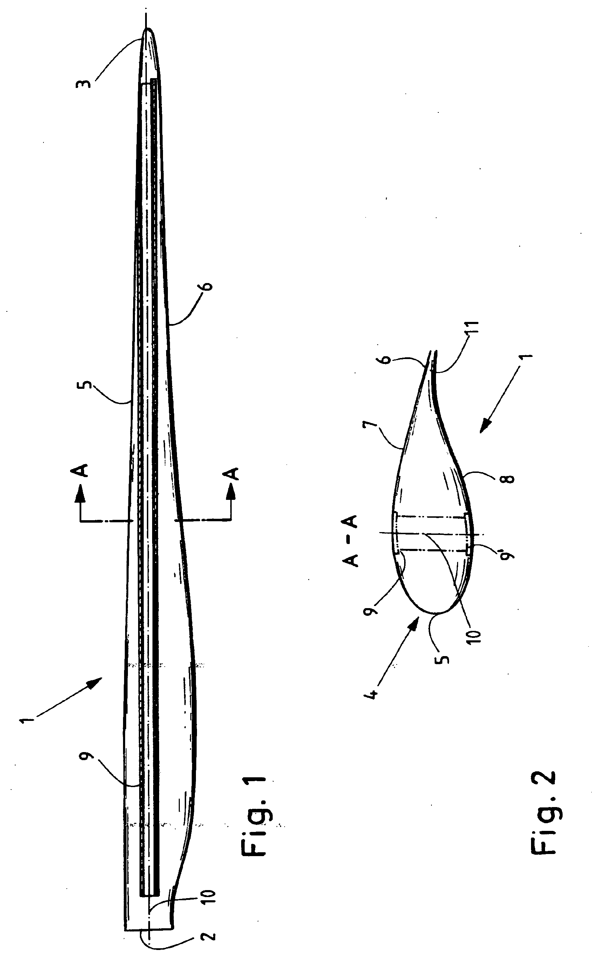

In Fig. 1 ist ein Rotorblatt 1 in einer Draufsicht schematisch dargestellt. Das Rotorblatt 1 erstreckt sich von einer Rotorblattwurzel 2 zu einer Rotorblattspitze 3 und weist eine Vorderkante 5 und eine Hinterkante 6 auf. Die Hinterkante 6 wird üblicherweise durch Besäumen erzeugt. Ebenfalls in Fig. 1 dargestellt ist ein Gurt 9, der sich in der Längserstreckung des Rotorblatts 1 erstreckt und der zur Stabilisierung des Rotorblatts 1 dient. Der Gurt 9 nimmt auf das Rotorblatt 1 einwirkende Kräfte und Biegemomente auf und leitet sie zur Blattwurzel 2 bzw. zur Rotornabe weiter. Die Gurt 9 liegt auf einer Längsschnittebene 10, die sich vom Zentrum der Rotorblattwurzel 2 bis zur Rotorblattspitze 3 erstreckt.

In Fig. 2 ist das Rotorblatt 1 aus Fig. 1 in einer Schnittdarstellung entlang einer Schnittlinie A-A aus Fig. 1 schematisch dargestellt. Die Vorderkante 5 und die Hinterkante 6 sind über eine Druckseite 7 und eine Saugseite 8 miteinander verbunden, die zusammen das Querschnittsprofil 4 des Rotorblatts 1 erzeugen. Es ist in Fig. 2 nicht dargestellt, dass das Querschnittsprofil 4 aus mehreren Schaltenteilen, beispielsweise zwei Halbschalen für die Druckseite 7 und die Saugseite 8, hergestellt ist. An der Hinterkante 6 liegen die Schalenteile der Druckseite 7 und der Saugseite 8 im Wesentlichen flächig aufeinander auf und schließen einen Verbindungsbereich 11 ein, der zur Verbindung der Schalenteile und zur Herstellung der Hinterkante 6 mit einem Klebstoff, beispielsweise einem Harz, gefüllt wird.

An der Druckseite 7 und der Saugseite 8 sind im Innenraum des Rotorblatts 1 Hauptgurte 9, 9' angebracht, die das Rotorblatt stabilisieren. Ebenfalls in Fig. 2 dargestellt ist die Längsschnittebene 10, die in Fig. 1 bereits dargestellt war. Diese verläuft quer zu einer Verbindungslinie oder Sehne zwischen der Vorderkante 5 und der Hinterkante 6 des Rotorblatts 1 und erstreckt sich von der Rotorblattwurzel 2 bis zur Rotorblattspitze 3. Zwischen den Hauptgurten 9, 9' sind zwei Stege angeordnet, die die Saugseite 8 mit der Druckseite 7 verbinden.

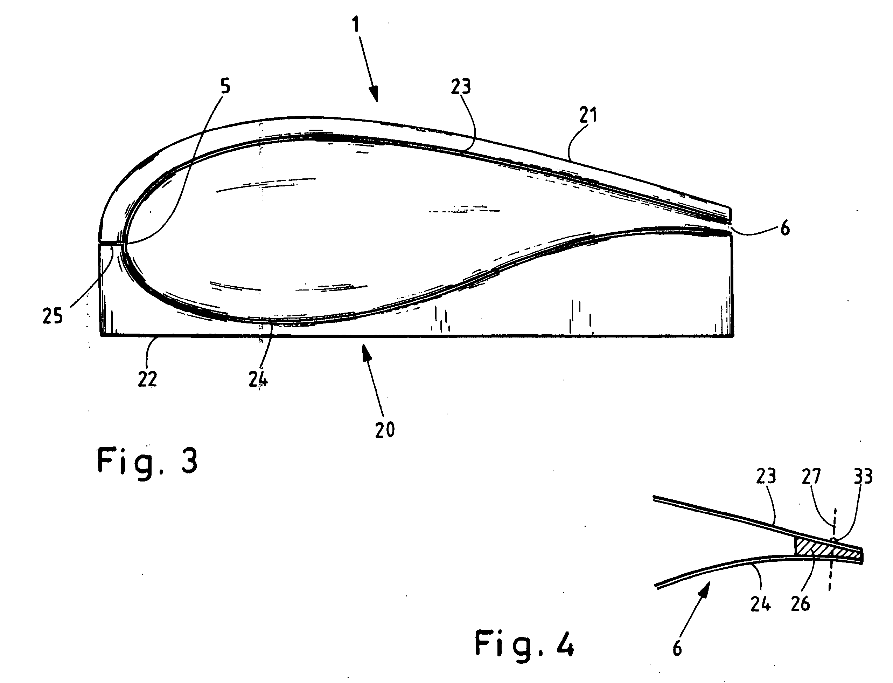

In Fig. 3 ist eine erfindungsgemäße Herstellungsform 20 dargestellt, die zwei Teilformen umfasst, nämlich eine obere Teilform 21 für eine druckseitige Halbschale 23 und eine untere Teilform 22 für eine saugseitige Halbschale 24. Die unten liegende Teilform 22 der Saugseite des Rotorblatts 1 ist ortsfest, während die Teilform 21 für die Druckseite des Rotorblatts 21 verschiebbar ist, um bei der Herstellung des Rotorblatts 1 aus den beiden Halbschalen 23, 24 eine passgenaue Ausrichtung der Halbschalen 23, 24 an der Vorderkante 5 entlang der gesamten Längserstreckung des Rotorblatts 1 einstellen zu können.

Dabei kann zum Ausgleich von Fertigungsungenauigkeiten der Halbschalen 23, 24 die oben liegende verschiebbare Teilform 21 um bis zu mehrere Zentimeter gegenüber der unteren Teilform 22 für die Saugseite verschoben werden. Die Form der oberen verschiebbaren Teilform 21 und der darin eingebetteten Halbschale 23 der Druckseite ändert sich bei der Verschiebung nicht, jedoch verschieben sich die Bereiche der Halbschalen 23, 24, die an der Hinterkante 5 einander gegenüberliegen. In Fig. 3 ist ebenfalls dargestellt, dass die Teilformen 21, 22 an der Vorderkante 5 an einer Stoßkante bzw. Stoßstelle 25 aneinanderstoßen.

In Fig. 4 ist ein Detail eines Rotorblatts in einem Querschnitt schematisch dargestellt. Es handelt sich um den Teil des Rotorblatts 1, der die Hinterkante 6 umfasst. Halbschalen 23 für die Druckseite und 24 für die Saugseite treffen an der Hinterkante 6 flächig aufeinander. Der Endbereich ist mit einer Klebmasse 26, beispielsweise einem Kunstharz, ausgefüllt, die die Halbschalen 23, 24 an der Hinterkante 6 fest miteinander verbindet.

Die Halbschale 23 der Druckseite weist kurz vor dem Ende der Halbschale 23 eine wulstförmige Besäumungsmarkierung 33 auf, anhand derer in einem nachfolgenden Verfahrensschritt eine Besäumungskante 27, die schematisch mit einer gestrichelten Linie dargestellt ist, erzeugt werden kann. Die Besäumungskante 27 ist am fertiggestellten Rotorblatt 1 sichtbar.

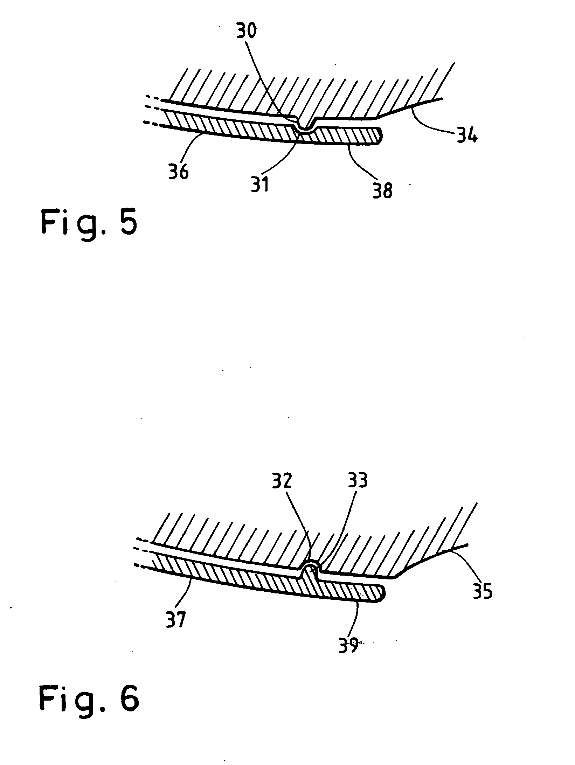

In den Figuren 5 und 6 sind zwei alternative Teilformen 34, 35 im Bereich der Hinterkante eines Rotorblatts 1 schematisch im Querschnitt dargestellt. Die Teilform 34 in Fig. 5 weist eine wulstförmige Markierungsform 30 auf, die in einem Schalenteil 36 eine rinnenförmige Besäumungsmarkierung 31 hinterlässt. Durch diese rinnenförmige Besäumungsmarkierung 31 wird ein Besäumungsrand 38 ausgewiesen, der, zusammen mit der wellenförmigen Besäumungsmarkierung im Zuge der Besäumung eines Rotorblatts abgeschnitten wird.

In Fig. 6 ist die komplementäre Alternative dargestellt, dass eine Teilform 35 eine rinnenförmige Markierungsform 32 aufweist, so dass das Schalenteil 37 im Bereich der Hinterkante eine wulstförmige Besäumungsmarkierung 33 erhält, mit der ein Besäumungsrand 39 gekennzeichnet wird. Im Laufe der Besäumung wird sowohl der Besäumungsrand 39 als auch die Besäumungsmarkierung 33 abgeschnitten.

### Bezugszeichenliste

- 1: Rotorblatt
- 2: Rotorblattwurzel
- 3: Rotorblattspitze
- 4: Querschnittsprofil
- 5: Vorderkante
- 6: Hinterkante
- 7: Druckseite
- 8: Saugseite
- 9: Hauptgurt Druckseite
- 9': Hauptgurt Saugseite
- 10: Längsschnittebene
- 11: Verbindungsbereich Hinterkante
- 20: Herstellungsform
- 21: Teilform Druckseite
- 22: Teilform Saugseite
- 23: Halbschale Druckseite
- 24: Halbschale Saugseite
- 25: Stoßstelle
- 26: Klebmasse
- 27: Besäumungskante
- 30: wulstförmige Markierungsform
- 31: rinnenförmige Besäumungsmarkierung
- 32: rinnenförmige Markierungsform
- 33: wulstförmige Besäumungsmarkierung
- 34, 35: Teilform
- 36, 37: Schalenteil
- 38, 39: Besäumungsrand

## Patentansprüche

1. Vorrichtung für die Herstellung von Rotorblättern (1) für Windenergieanlagen, mit einer mehrteiligen Herstellungsform (20, 21, 22) für ein Rotorblatt (1), das entlang einer Längserstreckung, die sich von einer Rotorblattwurzel (2) im Wesentlichen zu einer Rotorblattspitze (3) erstreckt, wenigstens einen Bereich aufweist, in der das Rotorblatt (1) ein aerodynamisches Querschnittsprofil (4) aufweist, das eine Profilvorderkante (5) und eine Profilhinterkante (6) aufweist, die über eine Saugseite (8) und eine Druckseite (7) des Querschnittsprofils (4) verbunden sind, wobei wenigstens zwei Teilformen (21, 22; 34, 35) für wenigstens zwei Schalenteile (23, 24; 36, 37) eines Rotorblatts (1) vorhanden sind, von denen ein erstes Schalenteil (23; 36, 37) und ein zweites Schalenteil (24; 36, 37) im Bereich der Profilhinterkante (6) im Wesentlichen flächig aufeinander liegend miteinander zu verbinden sind, wobei die Teilformen (21, 22; 34, 35) zur Herstellung von über die eigentliche Profilhinterkante (6) verlängerten Schalenteilen (23, 24; 36, 37) ausgebildet sind, **dadurch gekennzeichnet, daß** eine Teilform (21, 22; 34, 35) im Bereich der Hinterkante (6) eine sich in einer Längsrichtung der Teilform (21, 22; 34, 35) erstreckende Markierungsform (30, 32) zur Erzeugung einer Besäumungsmarkierung (31, 33) an einem Schalenteil (23, 24; 36, 37) im Bereich der Hinterkante (6) des Rotorblatts (1) aufweist.

2. Vorrichtung nach Anspruch 1, **dadurch gekennzeichnet, dass** die Markierungsform (30, 32) in der Teilform (21, 22; 34, 35) als längserstreckte vertiefte Rinne (32), als längserstreckter erhabener Wulst (30) oder als längserstreckte Kante ausgebildet ist.

3. Vorrichtung nach Anspruch 1 oder 2, **dadurch gekennzeichnet, dass** die Markierungsform (30, 32) unterbrochen oder abschnittsweise vorhanden ist.

4. Vorrichtung nach einem der Ansprüche 1 bis 3, **dadurch gekennzeichnet, dass** die Markierungsform (30, 32) in einer Teilform (21, 22; 34, 35) angeordnet ist, die für ein Schalenteil (23, 24; 36, 37) vorgesehen ist, das während der Herstellung des Rotorblatts (1) und/oder während einer Besäumung der Hinterkante (6) des Rotorblatts (1) bezüglich der Hinterkante (6) oben liegt.

5. Teilform (21, 22; 34, 35) einer Herstellungsform (20) für ein Rotorblatt (1) für eine Windenergieanlage, das entlang einer Längserstreckung, die sich von einer Rotorblattwurzel (2) im Wesentlichen zu einer Rotorblattspitze (3) erstreckt, wenigstens einen Bereich aufweist, in der das Rotorblatt (1) ein aerodynamisches Querschnittsprofil (4) aufweist, das eine Profilvorderkante (5) und eine Profilhinterkante (6) aufweist, die über eine Saugseite (8) und eine Druckseite (7) des Querschnittsprofils (4) verbunden sind, wobei die Teilform (21, 22; 34, 35) für ein Schalenteil (23, 24; 36, 37) des Rotorblatts (1) vorgesehen ist, das eine Hinterkante (6) des Rotorblatts (1) umfasst, wobei die Teilform (21, 22; 34, 35) im Bereich der Hinterkante (6) zur Herstellung eines über die eigentliche Profilhinterkante (6) verlängerten Schalenteils (23, 24; 36, 37) ausgebildet ist, **dadurch gekennzeichnet, daß** die Teilform eine sich in einer Längsrichtung der Teilform (21, 22; 34, 35) erstreckende Markierungsform (30, 32) zur Erzeugung einer Besäumungsmarkierung (31, 33) an dem Schalenteil (23, 24; 36, 37) im Bereich der Hinterkante (6) des Rotorblatts (1) aufweist.

6. Teilform (21, 22; 34, 35) nach Anspruch 5, **dadurch gekennzeichnet, dass** die Markierungsform (30, 32) als längserstreckte vertiefte Rinne (32) oder als längserstreckter erhabener Wulst (30) ausgebildet ist.

7. Verfahren zum Herstellen von Herstellungsformen (20) für Rotorblätter (1) für Windenergieanlagen, wobei ein Rotorblatt (1) entlang einer Längserstreckung, die sich von einer Rotorblattwurzel (2) im Wesentlichen zu einer Rotorblattspitze (3) erstreckt, wenigstens einen Bereich aufweist, in der das Rotorblatt (1) ein aerodynamisches Querschnittsprofil (4) aufweist, das eine Profilvorderkante (5) und eine Profilhinterkante (6) aufweist, die über eine Saugseite (8) und eine Druckseite (7) des Querschnittsprofils (4) verbunden sind, **dadurch gekennzeichnet, dass** in einer Teilform (21, 22; 34, 35) für ein Schalenteil (23, 24; 36, 37) des Rotorblatts (1), das die Hinterkante (6) des Rotorblatts (1) umfasst und über die eigentliche Profilhinterkante (6) verlängert hergestellt wird, im Bereich der Hinterkante (6) eine sich in Längsrichtung der Teilform (21, 22; 34, 35) erstreckende Markierungsform (30, 32) zur Erzeugung einer Besäumungsmarkierung (31, 33) an dem Schalenteil (23, 24; 36, 37) im Bereich der Hinterkante (6) des Rotorblatts (1) angebracht wird.

8. Verfahren zum Herstellen eines Rotorblatts (1) für eine Windenergieanlage, das entlang einer Längserstreckung, die sich von einer Rotorblattwurzel (2) im Wesentlichen zu einer Rotorblattspitze (3) erstreckt, wenigstens einen Bereich aufweist, in der das Rotorblatt (1) ein aerodynamisches Querschnittsprofil (4) aufweist, das eine Profilvorderkante (5) und eine Profilhinterkante (6) aufweist, die über eine Saugseite (8) und eine Druckseite (7) des Querschnittsprofils (4) verbunden sind, wobei Schalenteile (23, 24; 36, 37) des Rotorblatts (1) in einer mehrere Teilformen (21, 2; 34, 35) umfassenden Vorrichtung, insbesondere nach einem der Ansprüche 1 bis 4, hergestellt werden, **dadurch gekennzeichnet, dass** mittels einer Teilform (21, 22; 34, 35) mit einer sich in Längsrichtung der Teilform (21, 2; 34, 35) erstreckenden Markierungsform (30, 32) an einem Schalenteil (23, 24; 36, 37), das eine Hinterkante (6) des Rotorblatts (1) umfasst und über die eigentliche Profilhinterkante (6) verlängert hergestellt wird, im Bereich der Hinterkante (6) eine Besäumungsmarkierung (31, 33) an dem Schalenteil (23, 24; 36, 37) erzeugt wird und nach dem Zusammensetzen der Schalenteile (23, 24; 36, 37) zum Rotorblatt (1) die Hinterkante (6) des Rotorblatts (1) entlang der Besäumungsmarkierung (31, 33) besäumt wird.

9. Verfahren nach Anspruch 8, **dadurch gekennzeichnet, dass** die Besäumungsmarkierung (31, 33) beim Besäumen der Hinterkante (6) des Rotorblatts (1) bei einem abgeschnittenen Besäumungsrand (38, 39) verbleibt.

## Claims

1. A device for the production of rotor blades (1) for wind turbines having a multi-part production mold (20, 21, 22) for a rotor blade (1) that, along a longitudinal extension which extends from a rotor blade root (2) substantially to a rotor blade tip (3), has at least one area in which the rotor blade (1) has an aerodynamic cross-sectional profile (4), which has a leading edge (5) and a trailing edge (6) that are connected via a suction side (8) and a pressure side (7) of the cross-sectional profile (4), wherein at least two unit molds (21, 22; 34, 35) exist for at least two shell parts (23, 24; 36, 37) of a rotor blade (1), of which a first shell part (23; 36, 37) and a second shell part (24; 36, 37) lying substantially flat on each other in the area of the trailing edge (6) are to be connected together, wherein the unit molds (21, 22; 34, 35) are designed for producing shell parts (23, 24; 36, 37) extending beyond the actual trailing edge (6), **characterized in that** a unit mold (21, 22; 34, 35) in the area of the trailing edge (6) has a marking mold (30, 32) extending in a longitudinal direction of the unit mold (21, 22; 34, 35) for generating a trimming marking (31, 33) at a shell part (23, 24; 36, 37) in the area of the trailing edge (6) of the rotor blade (1).

2. The device according to claim 1, **characterized in that** the marking mold (30, 32) is designed in the unit mold (21, 22; 34, 35) as a longitudinally extending recessed channel (32), as a longitudinally extending raised bead (30), or as a longitudinally extending edge.

3. The device according to claim 1 or 2, **characterized in that** the marking mold (30, 32) is present interrupted or in sections.

4. The device according to one of claims 1 to 3, **characterized in that** the marking mold (30, 32) is disposed in a unit mold (21, 22; 34, 35) that is provided for a shell part (23, 24; 36, 37) which, during the production of the rotor blade (1) and/or during a trimming of the trailing edge (6) of the rotor blade (1), lies above relative to the trailing edge (6).

5. A unit mold (21, 22; 34, 35) of a manufacturing mold (20) for a rotor blade (1) for a wind turbine that, along a longitudinal extension which extends from a rotor blade root (2) substantially to a rotor blade tip (3), has at least one area in which the rotor blade (1) has an aerodynamic cross-sectional profile (4), which has a leading edge (5) and a trailing edge (6) that are connected via a suction side (8) and a pressure side (7) of the cross-sectional profile (4), wherein the unit mold (21, 22; 34, 35) is provided for a shell part (23, 24; 36, 37) of the rotor blade (1), which comprises a trailing edge (6) of the rotor blade (1), wherein the unit mold (21, 22; 34, 35), in the area of the trailing edge (6), is designed to produce a shell part (23, 24; 36, 37) extending beyond the actual trailing edge (6), **characterized in that** the unit mold has a marking mold (30, 32) extending in a longitudinal direction of the unit mold (21, 22; 34, 35) for generating a trimming marking (31, 33) at a shell part (23, 24; 36, 37) in the area of the trailing edge (6) of the rotor blade (1).

6. The unit mold (21, 22; 34, 35) according to claim 5, **characterized in that** the marking mold (30, 32) is designed as a longitudinally extending recessed channel (32) or as a longitudinally extending raised bead (30).

7. A method for the production of manufacturing molds (20) for rotor blades (1) for wind turbines, wherein a rotor blade (1) that, along a longitudinal extension which extends from a rotor blade root (2) substantially to a rotor blade tip (3), has at least one area in which the rotor blade (1) has an aerodynamic cross-sectional profile (4) which has a leading edge (5) and a trailing edge (6) that are connected via a suction side (8) and a pressure side (7) of the cross-sectional profile (4), **characterized in that** in a unit mold (21, 22; 34, 35) for a shell part (23, 24; 36, 37) of the rotor blade (1) that comprises the trailing edge (6) of the rotor blade (1) and is produced extending beyond the actual trailing edge (6), a marking mold (30, 32) that is in the area of the trailing edge (6), extends in the longitudinal direction of the unit mold (21, 22; 34, 35) and is for generating a trimming marking (31, 33) is applied on the shell part (23, 24; 36, 37) in the area of the trailing edge (6) of the rotor blade (1).

8. A method for the production of a rotor blade (1) for a wind turbine that along a longitudinal extension, which extends from a rotor blade root (2) substantially to a rotor blade tip (3), has at least one area in which the rotor blade (1) has an aerodynamic cross-sectional profile (4), which has a leading edge (5) and a trailing edge (6) that are connected via a suction side (8) and a pressure side (7) of the cross-sectional profile (4), wherein shell parts (23, 24; 36, 37) of the rotor blade (1) are produced in a device comprising multiple unit molds (21, 2; 34, 35), particularly according to one of claims 1 to 4, **characterized in that** by means of a unit mold (21, 22; 34, 35) having a marking mold (30, 32) extending in a longitudinal direction of the unit mold (21, 2; 34, 35) at a shell part (23, 24; 36, 37) that comprises a trailing edge (6) of the rotor blade (1) and is produced extending beyond the actual profile of the trailing edge (6), a trimming marking (31, 33) at the shell part (23, 24; 36, 37) is generated in the area of the trailing edge (6), and after assembling the shell parts (23, 24; 36, 37) into the rotor blade (1), the trailing edge (6) of the rotor blade (1) is trimmed along the trimming marking (31, 33).

9. The method according to claim 8, **characterized in that** the trimming marking (31, 33) during trimming of the trailing edge (6) of the rotor blade (1) remains with a cut off trimming border (38, 39).

## Revendications

1. Dispositif pour la fabrication de pales de rotor (1) pour des éoliennes, comprenant un moule multi-pièces (20, 21, 22) de fabrication d'une pale de rotor (1), qui, le long d'une extension longitudinale qui s'étend depuis une emplanture (2) de pale de rotor jusqu'à sensiblement une extrémité (3) de pale de rotor, comprend au moins une zone dans laquelle la pale de rotor (1) a un profil (4) aérodynamique en section transversale, lequel présente un bord d'attaque (5) et un bord de fuite (6) qui sont reliés par un côté d'aspiration (8) et un côté de pression (7) du profil en section transversale (4), au moins deux parties de moule (21, 22 ; 34, 35) étant présentes pour au moins deux parties de coque (23, 24 ; 36, 37) d'une pale de rotor (1), dont une première partie de coque (23 ; 36, 37) et une deuxième partie de coque (24 ; 36, 37), s'étendant sensiblement à plat l'une sur l'autre dans la zone du profil de bord de fuite (6), qui sont destinées à être assemblées, les parties de moule (21, 22 ; 34, 35) étant aménagées pour la fabrication du bord de fuite effectif (6) des parties de coque allongées (23, 24 ; 36, 37), **caractérisé en ce qu'**une partie de moule (21, 22 ; 34, 35), dans la zone du bord de fuite (6), présente une forme de marquage (30, 32) s'étendant dans une direction longitudinale de la partie de moule (21, 22 ; 34, 35) pour générer une marque de découpe (31, 33) sur une partie de coque (23, 24 ; 36, 37) dans la zone du bord de fuite (6) de la pale de rotor (1).

2. Dispositif selon la revendication 1, **caractérisé en ce que** la forme de marquage (30, 32) est aménagée dans la partie de moule (21, 22 ; 34, 35) sous la forme d'une rainure en creux (32) s'étendant longitudinalement, sous la forme d'un bourrelet saillant (30) s'étendant longitudinalement, ou sous la forme d'un rebord s'étendant longitudinalement.

3. Dispositif selon la revendication 1 ou la revendication 2, **caractérisé en ce que** la forme de marquage (30, 32) est présente en étant interrompue ou s'étendant par portions.

4. Dispositif selon l'une des revendications 1 à 3, **caractérisé en ce que** la forme de la marque (30, 32) est aménagée dans une partie de moule (21, 22 ; 34, 35) qui est prévue pour une partie de coque (23, 24 ; 36, 37), qui, lors de la fabrication de la pale de rotor (1) et / ou au cours d'une découpe du bord de fuite (6) de la pale de rotor (1), est située sur le dessus par rapport au bord de fuite (6).

5. Partie de moule (21, 22 ; 34, 35) d'un moule de fabrication (20) d'une pale de rotor (1) d'une éolienne, qui, le long d'une extension longitudinale, s'étend depuis une emplanture (2) de pale de rotor jusqu'à sensiblement une extrémité (3) de pale de rotor, et qui a au moins une partie dans laquelle la pale de rotor (1) a un profil (4) aérodynamique en section transversale comportant un bord d'attaque (5) et un bord de fuite (6), qui sont reliés par un côté d'aspiration (8) et un côté de pression (7) du profilé en section transversale (4), la partie de moule (21, 22 ; 34, 35) étant prévue pour une partie de coque (23, 24 ; 36, 37) de la pale de rotor (1) qui comprend un bord de fuite (6) de la pale de rotor (1), les parties de moule (21, 22 ; 34, 35) de fabrication des parties de coque (23, 24 ; 36, 37) étant prolongées dans la zone du bord de fuite (6) vis-à-vis du bord de fuite (6) effectif, **caractérisé en ce qu'**une partie de moule (21, 22; 34, 35) présente une forme de marquage (30, 32) s'étendant dans une direction longitudinale de la partie de moule (21, 22 ; 34, 35) pour générer une marque de découpe (31, 33) sur une partie de coque (23, 24 ; 36, 37) dans la zone du bord de fuite (6) de la pale de rotor (1).

6. Partie de moule (21, 22 ; 34, 35) selon la revendication 5, **caractérisé en ce que** la forme de marquage (30, 32) est aménagée sous la forme d'une rainure en creux (32) s'étendant longitudinalement ou sous la forme d'un bourrelet saillant (30) s'étendant longitudinalement.

7. Procédé de fabrication de moules de fabrication (20) pour des pales de rotor (1) d'éoliennes, dans lequel une pale de rotor (1), le long d'une extension longitudinale qui s'étend depuis une emplanture (2) de pale de rotor jusqu'à sensiblement une extrémité (3) de pale de rotor, comporte au moins une zone dans laquelle la pale de rotor (1) a un profil aérodynamique (4) en section transversale qui présente un bord d'attaque (5) et un bord de fuite (6), qui sont reliés par un côté d'aspiration (8) et un côté de pression (7) du profil en section transversale (4), est **caractérisé en ce que**, dans une partie de moule (21, 22 ; 34, 35) pour une partie de coque (23, 24 ; 36, 37) de la pale de rotor (1), qui comprend le bord de fuite (6) de la pale de rotor (1), et qui est fabriquée, de manière étendue, sur le profil effectif du bord de fuite (6), dans la zone du bord de fuite (6), il est aménagé une forme de marquage (30, 32) dans la direction longitudinale de la partie de moule (21, 22 ; 34, 35) pour générer une marque de découpe (31, 33) sur la partie de coque (23, 24 ; 36, 37) dans la zone du bord de fuite (6) de la pale de rotor (1).

8. Procédé de fabrication d'une pale de rotor (1) pour une éolienne, qui, le long d'une extension longitudinale qui s'étend depuis une emplanture (2) de pale de rotor jusqu'à sensiblement une extrémité (3) de pale de rotor, comporte au moins une zone dans laquelle la pale de rotor (1) a un profil aérodynamique (4) en section transversale qui présente un bord d'attaque (5) et un bord de fuite (6), qui sont reliés par un côté d'aspiration (8) et un côté de pression (7) du profil en section transversale (4), lesdites parties de moule (23, 24 ; 36, 37) de la pale de rotor (1) comprenant, en particulier, dans une pluralité de parties de moule (21, 22 ; 34, 35) un dispositif produit en particulier selon l'une des revendications 1 à 4, **caractérisé en ce qu'**au moyen d'une partie de moule (21, 22 ; 34, 35) comprenant une forme de marquage (30, 32) s'étendant selon une direction longitudinale de la partie de moule (21, 2; 34, 35), il est créé sur une partie de coque (23, 24 ; 36, 37) comprenant un bord de fuite (6) de la pale de rotor (1), en prolongement au-delà du bord de fuite profilé (6) effectif, dans la zone du bord de fuite (6), une marque de découpe (31, 33) sur la partie de coque (23, 24 ; 36, 37), et **en ce que**, après l'assemblage des parties de coque (23, 24 ; 36, 37) de la pale de rotor (1), le bord de fuite (6) de la pale de rotor (1) est découpé le long de la marque de coupe (31, 33).

9. Procédé selon la revendication 8, **caractérisé en ce que** la marque de découpe (31, 33), lors de la découpe du bord de fuite (6) de la pale de rotor (1) conserve une bordure de coupe découpée (38, 39).
